# EUROPEAN PATENT SPECIFICATION

(11) **EP 3 180 545 B1**
(45) Date of publication and mention of the grant of the patent: **16.10.2019**
(21) Application number: 14715975.0
(22) Date of filing: 25.02.2014
(51) Int. Cl.: F16F 15/121

(54) **A TORSIONAL VIBRATION DAMPER**
DREHSCHWINGUNGSDÄMPFER
AMORTISSEUR DE VIBRATIONS DE TORSION

(43) Date of publication of application: 21.06.2017
(73) Proprietor: Walters, Christopher Paulet Melmoth, Littlehampton, West Sussex BN16 1RS (GB)
(72) Inventor: Walters, Christopher Paulet Melmoth, Littlehampton, West Sussex BN16 1RS (GB)
(74) Representative: Ashton, Timothy
(86) International application number: PCT/GB2014/050565
(87) International publication number: WO 2015/128595

(56) References cited:
- EP-A1- 2 647 872
- US-A- 2 551 718

## Description

This invention relates to a torsional vibration damper, and is particularly, although not exclusively, concerned with a torsional vibration damper for use in a hub/blade rotation and pitch control mechanism of a helicopter tail rotor.

The blades of a helicopter tail rotor are commonly mounted on a hub in such a way that the blades are able to pivot on the hub about all axes, and so are able to move "in plane", out of plane" and about the blade pitch axis.. The blades are thus able to vibrate in the rotor plane so as to increase or decrease their lead or lag angles with respect to the hub. Such vibration may be induced by unequal aerodynamic loading of the rotor blades as they rotate. In practice, the movement tends to be primarily in the lag direction from the nominal position of each blade. Lead and lag vibration can couple with other vibration modes of the aircraft, and may also interact with fuselage and ground based aerodynamic phenomena, to create destructive aerodynamic and mechanical vibrations.

It is therefore necessary to damp the torsionally vibratory tail rotor lag motion at varying blade pitch and swash angles to control aerodynamic and mechanical effects at the rear of the helicopter. It is known to damp lead lag vibration by means of elastomeric dampers which act between the hub and each respective blade. While such dampers are relatively maintenance free, they do degrade over time, so that their characteristics change. Also, their damping response is non-linear, being significantly affected by temperature, loading, and the frequency and amplitude of the vibration to be damped. The design of such dampers to cope with the range of conditions experienced in practice is thus complex.

The document EP 2 647 872 A1 shows a torsional vibration damper comprising first and second members which are rotatable relatively to each other about a central axis, the first member comprising a first body provided with at least one cam block which has inner and outer cam follower surfaces, with respect to the central axis.

According to the present invention there is provided a torsional vibration damper comprising first and second members which are rotatable relatively to each other about a central axis, the first member comprising a first body provided with at least one cam block which has inner and outer cam follower surfaces, with respect to the central axis, and the second member comprising a second body having inner and outer flexible fingers which extend from the second body and have cam surfaces which respectively contact the inner and outer cam follower surfaces, whereby relative rotation between the first and second members is accompanied by flexure of the flexible fingers as the cam surfaces travel over the cam follower surfaces.

At least one of the inner and outer cam follower surfaces approaches the central axis continuously from one end to the other. As a result, relative rotation between the first and second members causes progressively increased or decreased flexure of the respective finger, depending on the direction of relative rotation.

At least one of the inner and outer cam follower surfaces may be curved. The centre of curvature of the curved surface may be disposed radially inwardly of the surface itself, with respect to the central axis.

The block may be provided with a stop face which is engageable by one of the flexible fingers in order to limit the extent of relative rotation between the members.

The second body may be provided with a pair of the inner flexible fingers and a pair of the outer flexible fingers, the two inner flexible fingers and the two outer flexible fingers respectively being directed towards each other, the cam surfaces of the flexible fingers contacting respective cam follower surfaces of a common block.

There may be a pair of stop faces on the block, for respective engagement with the outer fingers.

The block, or at least one of the blocks, may comprise a liner of a suitable friction material to provide a desired coefficient of friction at the interface between the cam follower surfaces and the respective cam surface, in order to achieve a required load or torsional rate characteristic.

In a specific embodiment, the outer finger contact points on the respective blocks provide contact forces normal to the cam surfaces at the instantaneous points of contact which always act inwardly at offsets on the same side of the rotational axis. The inner finger contact points on the respective blocks provide contact forces normal to the cam surfaces at the instantaneous points of contact which always act outwardly at offsets on the other side of the rotational axis. The offset forces from both inner and outer fingers produce torques about the rotational axis in the same direction as each other. Also, friction torques parallel to the contacting surfaces at the instantaneous points of contact are also in the same rotational direction as each other. The friction torques are added to the torques generated by the contact forces in one direction of rotation, but are subtracted in the other.

The block may be one of a plurality of similar blocks carried by the body of the first member, respective additional flexible fingers being provided on the body of the second member for engagement with the cam follower surfaces of the additional blocks.

The inner and outer fingers contacting each block may be mounted on the second body at spaced apart supporting regions of the second body, each supporting region carrying two oppositely directed ones of the inner and outer fingers.

The first body may be in the form of a housing which accommodates the second body. The housing may contain a lubricant.

The first body may comprise one of two bodies of the first member, and the second body may comprise one of two second bodies of the second member. The two first bodies and the two second bodies thus comprise separate damper units which are spaced apart in the direction of the central axis, and are interconnected by a hub.

A first connecting arm may be connected to the first member and a second connecting arm may be connected to the second member, the connecting arms being pivotable with respect to each other.

The present invention also provides a bladed rotor provided with at least one lead lag damper in the form of a torsional vibration damper as defined above. The bladed rotor may be a tail rotor of a rotorcraft such as a helicopter. The present invention may also be applied to a lag hinge or other device requiring a torsional spring rate with torsional damping.

Another aspect of the present invention provides a torsional vibration damper comprising first and second members which are rotatable relatively to each other about a central axis, the first member comprising a first body provided with at least one cam block which has a cam follower surface, and the second member comprising a second body having a flexible finger which extends from the second body and has a cam surface which contacts the cam follower surface, whereby relative rotation between the first and second members is accompanied by flexure of the flexible finger as the cam surface travels over the cam follower surface, the first and second members being sealed with respect to each other by means of a flexible sealing ring which is rotationally connected at its inner and outer peripheries to the first and second members whereby limited relative rotation between the first and second members is accommodated by resilient flexure of the sealing ring.

For a better understanding of the present invention, and to show more clearly how it may be carried into effect, reference will now be made, by way of example, to the accompanying drawings, in which:
Figure 1 is a sectional view of a lead lag damper for use in a helicopter tail rotor;
Figure 2 is an exploded view of the damper of Figure 1;
Figure 3 is a view of the interior mechanism of a damper;
Figure 4 shows a component of the damper;
Figure 5 is an enlarged view of part of the damper;
Figure 6 shows a cam block of the damper;
Figure 7 shows the damper in one condition;
Figure 8 shows the damper in another condition;
Figure 9 corresponds to Figure 1 but shows an alternative embodiment;
Figure 10 is an exploded view of the damper of Figure 9;
Figure 11 shows a variant of a component of the damper of Figures 9 and 10; and
Figure 12 a variant of another component of the damper of Figures 9 and 10.

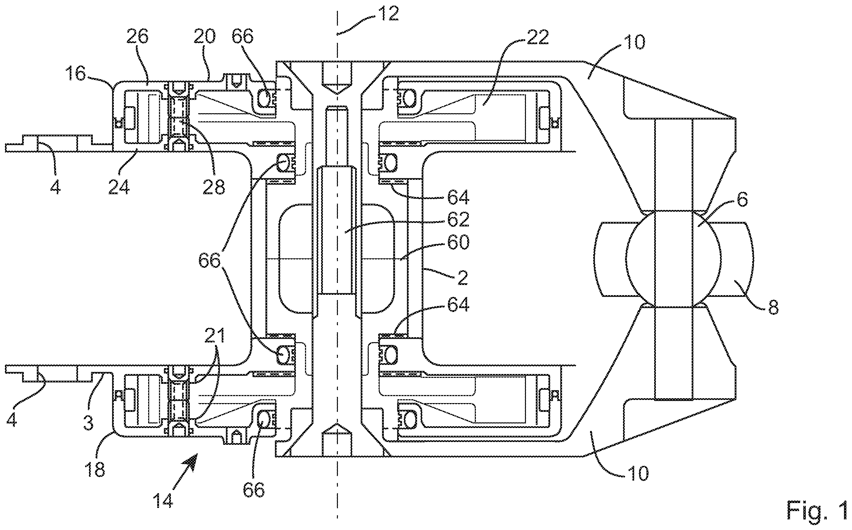

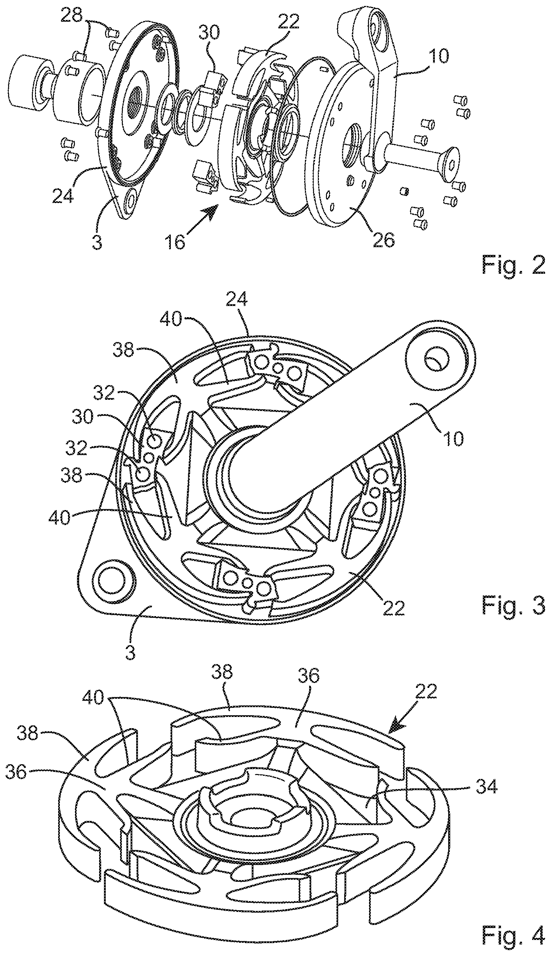

Referring to Figures 1 and 2, the damper comprises an outer casing 2 which, in use, is mounted on a rotor hub of a helicopter tail rotor (not shown). Arms 3 extend from opposite ends of the outer casing 2, and are provided with aligned bores 4. A pin (not shown) extends through the bores 4 and the rotor hub to prevent rotation of the outer casing 2 about the rotor hub.

A pair of arms 10 is mounted for rotation with respect to the outer casing 2 about a central axis 12. At the ends away from the outer casing 2, the arms carry a spherical bearing 6 which supports a link 8 by which the arms 10 are connected to a respective blade of the tail rotor. Consequently, lead or lag movement of the blade is transmitted by the link 8 to the arms 10, causing the arms 10 to rotate relatively to the outer casing 2 about the central axis 12.

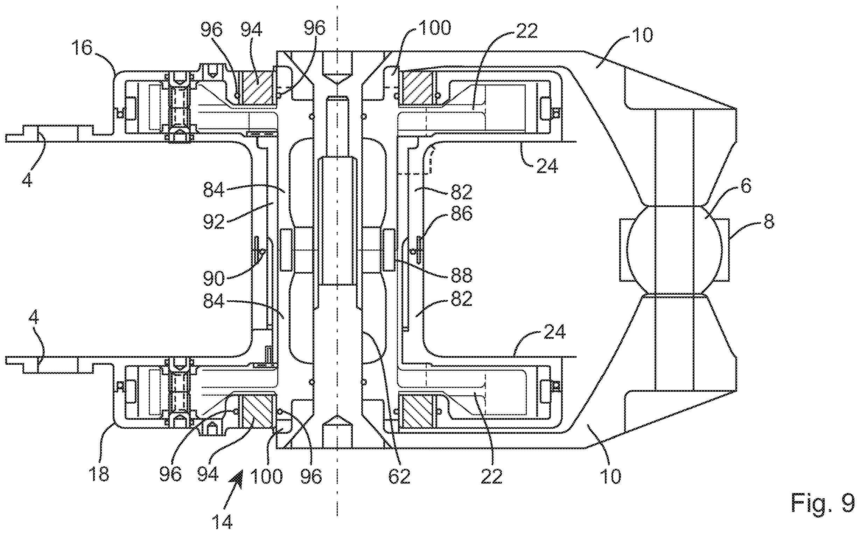

The damper shown in Figures 1 and 2 is a torsional vibration damper 14 which comprises two handed, but otherwise identical, damper units 16, 18 which are interconnected by the casing 2 which thus serves as a connecting member. In Figure 1, the casing 2 is shown as a separate element from the units 16, 18. In an alternative embodiment, as discussed below with reference to Figure 9, the casing 2 may be split at its mid-point, with one casing part secured to, or integral with, one of the damper units 16, 18, and the other casing part secured to, or integral with, the other. The damper units 16, 18 are then interconnected at the split line of the casing 2, where a seal is provided. For simplicity, only the damper unit 16 will be described below.

The damper unit 16 comprises a first member 20 in the form of a housing, and a second member 22, shown separately in Figure 4, which is accommodated within the housing. For this purpose, the housing 20 comprises inner and outer sections 24, 26 which are secured together by tapered bolts 28 having a small taper angle, for example of less than 5º. The inner section 24 includes the respective arm 3. The housings 20 of the two damper units 16, 18 are spaced apart from each other by the outer split casing 2. As shown in Figures 1, 3 and 5, the housing 20 is provided with bosses 21 engaging with counterbores 32 in cam blocks 30 also provided with central holes through which the bolts 28 pass. The tapered bolts are threaded inside the blocks 30 in order to hold the cam blocks 30 in place in the respective section 24, 26. This arrangement provides a very compact and efficient means of achieving a seal and an optimum load path from the block bosses into the housings 20, thus allowing thin, light material sections to be employed.

As shown in Figure 4, the second member comprises a central body 34 which is fixed for rotation to an axle 62 comprising a pair of telescoped bolts which also carry the arms 10. The central body 34 is generally square and provides supporting regions 36 at its corners. Each supporting region 36 carries four flexible fingers, namely two oppositely directed outer fingers 38 and two oppositely directed inner fingers 40. In the context of the fingers 38, 40, the terms "inner" and "outer" refer to the radial direction centred on the central axis 12.

It will be appreciated from Figure 3 that each cam block 30 lies between adjacent supporting regions 36 and is contacted by an inner and an outer finger 38 projecting from the supporting region 36 on one side and an inner and an outer finger 38 projecting in the opposite direction from the supporting region 36 on the other side. Consequently, all four of the cam blocks 30 have the same arrangement of inner and outer fingers 38, 40 as each other.

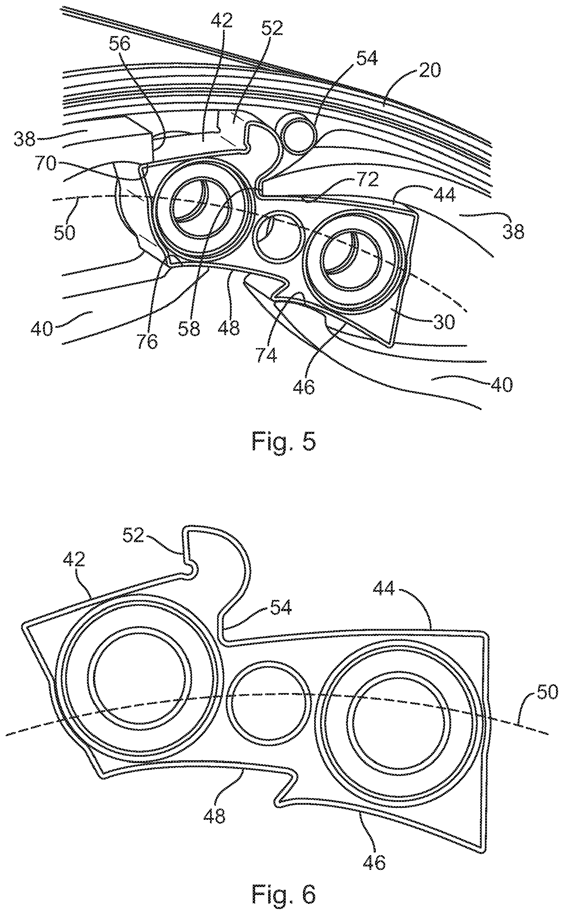

This is shown more clearly in Figure 5. Each finger 38, 40 has a contact surface 70, 72, 74, 76 which serves as a cam surface and so contacts a respective cam follower surface 42, 44, 46, 48 of the cam block 30. As can be seen in Figure 5, the cam follower surfaces 42, 44, 46, 48 are all inclined away from a notional circumferential surface indicated by a dashed line 50 in the direction to the right as seen in Figures 5 and 6. Consequently, as the cam block 30 moves to the left, the outer fingers 38 are deflected radially outwardly and the inner fingers 40 are deflected radially inwardly. In the embodiment shown in the Figures, the cam follower surfaces 42, 44, 46, 48 are all curved, with the centres of curvature lying radially inwardly of the surfaces themselves. Thus, the outer cam follower surfaces 42, 44 are convex, while the inner cam follower surfaces 46, 48 are concave. In other embodiments, all or part of the cam follower surfaces may be flat.

The cam follower surface 42 terminates at its right-hand end at a stop face 52, and the outer cam follower surface 44 terminates at its left-hand end at a stop face 54. The stop faces 52, 54 are positioned for engagement by end faces 56, 58 of the outer fingers 38 to limit relative rotation between the cam block 30 and the second member 22.

An inner hub 60 is supported on the axle 62 and extends between the second members 22 of the two damping units 16, 18. Thrust washers 64 are provided between respective radial faces of the inner hub 60 and the inner housing section 24, and sealing rings 66 provide seals between the housing sections 24, 26 and the second member 22. The sealing rings 66 may, for example, be oil resistant elastomeric bonded sealing rings having a low torsional spring rate, which are fixed against rotation at their inner and outer circumferences to the respective housing sections 24, 26 and the second members 22, so that no sliding contact is required. Such sealing rings can deform to accommodate a moderate range of angular movement about the central axis 12 between the first and second members 20, 22, for example less than 10°. As a result, such sealing rings 66 experience low stress and so can provide reliable sealing over a long working life. Alternatively, conventional sliding contact sealing rings may be used. The sealing rings 66 make the interior of the housing 20 fluid-tight, so that it can contain lubricant for lubricating the contact regions between the cam follower surfaces 42, 44, 46, 48 and the contact surfaces 70, 72, 74, 76.

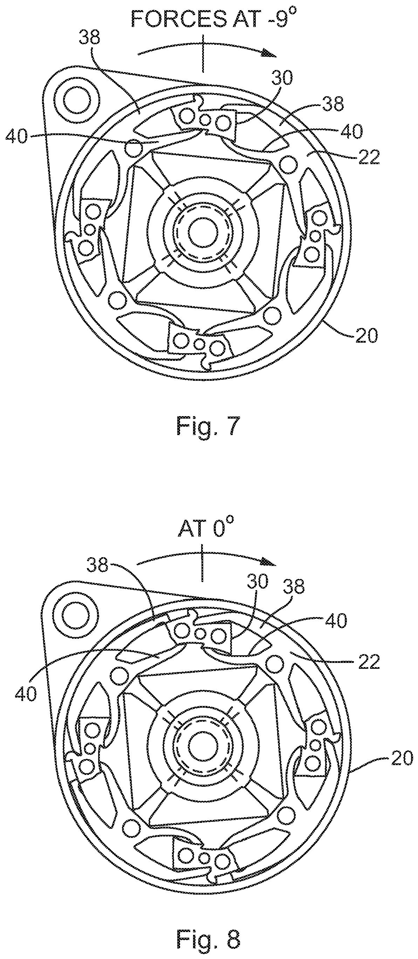

In operation, as shown in Figures 7 and 8, lead lag displacements of the tail rotor blades is accompanied by relative rotation between the first and second members 20, 22 of the damper. In Figure 7, the first and second members 20, 22 are shown in the condition corresponding to blade lag of 9° from the zero condition shown in Figure 8. In the condition shown in Figure 7, further relative rotation between the first and second members is prevented by abutment between the end faces 56, 58 of the outer fingers 38 and the respective stop faces 52, 54 (see Figure 5).

Travel from the zero condition shown in Figure 8 towards the 9° condition shown in Figure 7 is accompanied by sliding movement of the contact faces 70, 72, 74, 76 of the fingers 38, 40 over the respective cam follower surfaces 42, 44, 46, 48. This movement causes outward deflection of the outer fingers 38 and inwards deflection of the inner fingers 40, and the associated stresses in the fingers 38, 40 progressively resist further rotation in the direction of increasing lag. This is because the normal components of the forces applied to the cam blocks 30 by the fingers 38, 40 at all contact points between the cam surfaces 42, 44, 46, 48 and the respective fingers 38, 40 are offset from the radial direction with respect to the axis 12 in such a way as to apply respective torques about the axis 12 in the same direction as each other. Furthermore, the frictional contact between the contact faces 70, 72, 74, 76 resists the relative rotation, the resulting frictional forces also increasing in the direction of increasing lag. In addition, the frictional forces apply a resistive torque to the cam blocks 30 which assists the torque generated by the normal force components in one direction of rotation, but opposes it in the other. This arrangement creates a torque loop for the torsional movement in both directions that represents both torsional spring rate and damping.

By appropriate selection of the profiles of the cam follower surfaces 42, 44, 46, 48, the characteristics of the damping units can be designed so as to provide optimum damping of the system under all operating conditions. Since the deflections of the fingers 38, 40 are small, stresses in them are kept low, so contributing to a long operational life of the damper. Furthermore, the fingers 38 and 40 act in opposite radial directions on the cam blocks 30, substantially balancing out the net radial force applied to the blocks. The structure supporting the blocks 30 does not therefore need to withstand major radial forces, and so can be relatively light and compact.

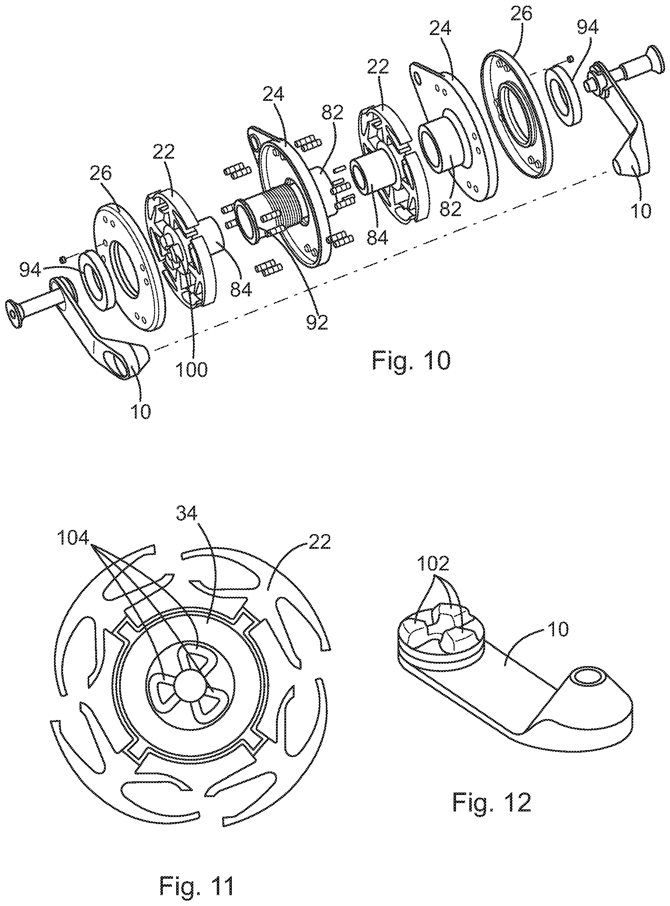

The alternative embodiment shown in Figures 9 and 10 corresponds in many respects to that of Figures 1 to 8, and the same reference numbers have been used to designate the same or similar components. In the embodiment of Figures 9 and 10, the casing 2 comprises two casing parts 82 which are integral, respectively, with the inner sections 24 of the damper units 16, 18. Similarly, the inner hub 60 of Figure 1 is replaced by two hub parts 84 with are integral with the second members 22 of the damper units. Where the casing parts 82 and the hub parts 84 meet, they are located by means of dowel pins 86, 88. A sealing ring 90 provides a seal between the two casing parts 82. As before, the components are held together by mean of the telescoped bolts 62.

A bronze bush 92 is screwed into the casing formed by the casing parts 82 to secure the inner sections 24 together and to provide a bearing surface for the hub formed by the hub parts 84.

Sealing between the first and second members 20, 22 is provided by means of relatively thick soft rubber sealing rings 94 which are rotationally locked with respect to the members 20, 22. The sealing rings 94 have a low rate and so are able to accommodate the expected relative rotation between the members 20, 22 by virtue of their resilient deflection, thus avoiding the need for sliding seals at these locations. To provide added security, supplementary O-ring seals 96 are provided at the inner and outer diameters of the sealing rings 94. Further O-rings 98 are situated between the telescoping bolts 62 and the hub parts 84.

In the embodiment of Figures 9 and 10, the arms 10 are rotationally secured to the second members 22 by means of dogs 100. An alternative system in this region is shown in Figures 11 and 12, in which the rotational locking is achieved by a "cloverleaf" arrangement of three lobes 102 on the arm 10 which engage in three complementary depressions 104 in the central body 34 of the second member 22 under the action of the telescoping bolts 62. This arrangement provides a robust yet compact means of transmitting displacement of the arms 10 to the second member 22.

Although the invention has been described in the context of a helicopter tail rotor, the same design, with suitable modifications, can be applied to a helicopter main rotor, as well as to other systems in which torsional vibration damping is required.

## Claims

1. A torsional vibration damper comprising first and second members (20, 22) which are rotatable relatively to each other about a central axis (12), the first member (20) comprising a first body provided with at least one cam block (30) which has inner and outer cam follower surfaces (42, 44, 46, 48), with respect to the central axis (12), **characterized by** the second member (22) comprising a second body having inner and outer flexible fingers (38, 40) which extend from the second body and have cam surfaces (70, 72, 74, 76) which respectively contact the inner and outer cam follower surfaces (42, 44, 46, 48), whereby relative rotation between the first and second members is accompanied by flexure of the flexible fingers (38, 40) as the cam surfaces (70, 72, 74, 76) travel over the cam follower surfaces (42, 44, 46, 48).

2. A torsional vibration damper as claimed in claim 1, in which at least one of the inner and outer cam follower surfaces (42, 44, 46, 48) approaches the central axis (12) continuously from one end of the respective cam surface (42, 44, 46, 48) to the other.

3. A torsional vibration damper as claimed in claim 1 or 2, in which at least one of the inner and outer cam follower surfaces (42, 44, 46, 48) is curved.

4. A torsional vibration damper as claimed in claim 3, in which the centre of curvature of the curved cam surface (42, 44, 46, 48) is disposed radially inwardly of the surface.

5. A torsional vibration damper as claimed in any one of the preceding claims, in which the cam block (30) is provided with a stop face (52, 54) which is engageable by an abutment face (56, 58) on a respective one of the fingers (38, 40) to limit relative rotation between the first and second members (20, 22).

6. A torsional vibration damper as claimed in any one of the preceding claims, in which the second body is provided with a pair of the inner flexible fingers (40) and a pair of the outer flexible fingers (38), the respective inner and outer fingers (38, 40) extending from the second body towards one another, the cam surfaces (70, 72, 74, 76) of the pairs of inner and outer flexible fingers (38, 40) contacting respective cam follower surfaces (42, 44, 46, 48) on the same block.

7. A torsional vibration damper as claimed in claim 6 when appendant to claim 5, in which the stop face on the cam block (30) is one of a pair of stop faces (52, 54) which are positioned for engagement with the respective outer fingers (38).

8. A torsional vibration damper as claimed in claim 6 or 7, in which the block (30) is one of a plurality of similar blocks on the body, the cam follower surfaces (42, 44, 46, 48) of each cam block (30) being contacted respectively by cam surfaces (70, 72, 74, 76) of four of the flexible fingers (38, 40).

9. A torsional vibration damper as claimed in any one of claims 6 to 8, in which the inner and outer fingers (38, 40) contacting each cam block (30) are connected to the second body at spaced apart supporting regions (36) of the second body, each supporting region carrying two oppositely directed ones of the inner and outer fingers (38, 40).

10. A torsional vibration damper as claimed in any one of the preceding claims, in which the first body comprises a housing which accommodates the second body.

11. A torsional vibration damper as claimed in claim 10, in which the housing contains a lubricant.

12. A torsional vibration damper as claimed in any one of the preceding claims, in which the first body is one of two first bodies of the first member (20) and the second body is one of two second bodies of the second member (22), the two first bodies and the two second bodies defining respective damper units (16, 18) which are spaced apart from each other along the central axis (12) and interconnected by a connecting member (2).

13. A torsional vibration damper as claimed in any one of the preceding claims, in which a first connecting arm (10) is secured to the first member (20) and a second connecting arm (10) is secured to the second member (22), the connecting arms (10) being pivotable with respect to each other about the central axis (12).

14. A mechanism incorporating a torsional vibration damper in accordance with any one of the preceding claims.

15. A mechanism as claimed in claim 14, which is a bladed rotor, preferably which is a helicopter tail rotor.

## Patentansprüche

1. Torsionsschwingungsdämpfer, der erste und zweite Elemente (20, 22) umfasst, die relativ zueinander um eine zentrale Achse (12) drehbar sind, wobei das erste Element (20) einen ersten Körper umfasst, der mit wenigstens einem Nockenblock (30) versehen ist, der innere und äußere Nockennachlaufflächen (42, 44, 46, 48) mit Bezug auf die zentrale Achse (12) hat, **dadurch gekennzeichnet, dass** das zweite Element (22) einen zweiten Körper mit inneren und äußeren flexiblen Fingern (38, 40) umfasst, die sich vom zweiten Körper weg erstrecken und Nockenflächen (70, 72, 74, 76) aufweisen, die jeweils die innere und äußere Nockennachlauffläche (42, 44, 46, 48) berühren, so dass eine relative Drehung zwischen dem ersten und zweiten Element von einer Biegung der flexiblen Finger (38, 40) begleitet wird, während die Nockenflächen (70, 72, 74, 76) über die Nockennachlaufflächen (42, 44, 46, 48) wandern.

2. Torsionsschwingungsdämpfer nach Anspruch 1, bei dem sich wenigstens eine der inneren und äußeren Nockennachlaufflächen (42, 44, 46, 48) der zentralen Achse (12) kontinuierlich von einem Ende der jeweiligen Nockenfläche (42, 44, 46, 48) zum anderen nähert.

3. Torsionsschwingungsdämpfer nach Anspruch 1 oder 2, wobei wenigstens eine der inneren und äußeren Nockennachlaufflächen (42, 44, 46, 48) gekrümmt ist.

4. Torsionsschwingungsdämpfer nach Anspruch 3, wobei die Krümmungsmitte der gekrümmten Nockenfläche (42, 44, 46, 48) radial einwärts von der Fläche angeordnet ist.

5. Torsionsschwingungsdämpfer nach einem der vorherigen Ansprüche, wobei der Nockenblock (30) mit einer Anschlagfläche (52, 54) versehen ist, an der eine Anschlagfläche (56, 58) an einem jeweiligen einen der Finger (38, 40) angreifen kann, um eine relative Drehung zwischen den ersten und zweiten Elementen (20, 22) zu begrenzen.

6. Torsionsschwingungsdämpfer nach einem der vorherigen Ansprüche, wobei der zweite Körper mit einem Paar der inneren flexiblen Finger (40) und einem Paar der äußeren flexiblen Finger (38) versehen ist, wobei sich die jeweiligen inneren und äußeren Finger (38, 40) vom zweiten Körper zueinander hin erstrecken, wobei die Nockenflächen (70, 72, 74, 76) der Paare von inneren und äußeren flexiblen Fingern (38, 40) jeweilige Nockennachlaufflächen (42, 44, 46, 48) auf demselben Block berühren.

7. Torsionsschwingungsdämpfer nach Anspruch 6 in Abhängigkeit von Anspruch 5, wobei die Anschlagfläche an dem Nockenblock (30) eine aus einem Paar Anschlagflächen (52, 54) ist, die für einen Eingriff mit den jeweiligen äußeren Fingern (38) positioniert sind.

8. Torsionsschwingungsdämpfer nach Anspruch 6 oder 7, wobei der Block (30) einer von mehreren ähnlichen Blöcken an dem Körper ist, wobei die Nockennachlaufflächen (42, 44, 46, 48) jedes Nockenblocks (30) jeweils durch Nockenflächen (70, 72, 74, 76) von vier der flexiblen Finger (38, 40) berührt werden.

9. Torsionsschwingungsdämpfer nach einem der Ansprüche 6 bis 8, wobei die inneren und äußeren Finger (38, 40), die jeden Nockenblock (30) berühren, mit dem zweiten Körper in beabstandeten Auflageregionen (36) des zweiten Körpers verbunden sind, wobei jede Auflageregion zwei entgegengesetzt gerichtete der inneren und äußeren Finger (38, 40) tragen.

10. Torsionsschwingungsdämpfer nach einem der vorherigen Ansprüche, wobei der erste Körper ein Gehäuse umfasst, das den zweiten Körper aufnimmt.

11. Torsionsschwingungsdämpfer nach Anspruch 10, wobei das Gehäuse ein Schmiermittel enthält.

12. Torsionsschwingungsdämpfer nach einem der vorherigen Ansprüche, wobei der erste Körper einer von zwei ersten Körpern des ersten Elements (20) ist und der zweite Körper einer von zwei zweiten Körpern des zweiten Elements (22) ist, wobei die zwei ersten Körper und die zwei zweiten Körper jeweilige Dämpfereinheiten (16, 18) definieren, die voneinander entlang der zentralen Achse (12) beabstandet und durch ein Verbindungselement (2) miteinander verbunden sind.

13. Torsionsschwingungsdämpfer nach einem der vorherigen Ansprüche, wobei ein erster Verbindungsarm (10) am ersten Element (20) befestigt ist und ein zweiter Verbindungsarm (10) am zweiten Element (22) befestigt ist, wobei die Verbindungsarme (10) mit Bezug zueinander um eine zentrale Achse (12) schwenken können.

14. Mechanismus, der einen Torsionsschwingungsdämpfer nach einem der vorherigen Ansprüche umfasst.

15. Mechanismus nach Anspruch 14, der ein Schaufelrotor ist, der vorzugsweise ein Hubschrauberheckrotor ist.

## Revendications

1. Amortisseur de vibrations de torsion comprenant des premier et deuxième éléments (20, 22) qui peuvent tourner l'un par rapport à l'autre autour d'un axe central (12), le premier élément (20) comprenant un premier corps muni d'un ou plusieurs blocs de came (30) qui ont des surfaces de contre-came extérieures et intérieures (42, 44, 46, 48), par rapport à l'axe central (12), **caractérisé en ce que** le deuxième élément (22) comprend un deuxième corps ayant des doigts flexibles extérieurs et intérieurs (38, 40) qui s'étendent du deuxième corps et ont des surfaces de came (70, 72, 74, 76) qui sont respectivement en contact avec les surfaces de contre-came extérieures et intérieures (42, 44, 46, 48), grâce à quoi la rotation relative entre les premier et deuxième éléments est accompagnée d'une flexion des doigts flexibles (38, 40) à mesure que les surfaces de came (70, 72, 74, 76) circulent sur les surfaces de contre-came (42, 44, 46, 48).

2. Amortisseur de vibrations de torsion selon la revendication 1, dans lequel au moins une des surfaces de contre-came extérieures et intérieures (42, 44, 46, 48) s'approche de l'axe central (12) continuellement depuis une extrémité de la surface de came respective (42, 44, 46, 48) à l'autre.

3. Amortisseur de vibrations de torsion selon la revendication 1 ou 2, dans lequel au moins une des surfaces de contre-came extérieures et intérieures (42, 44, 46, 48) est courbée.

4. Amortisseur de vibrations de torsion selon la revendication 3, dans lequel le centre de courbature de la surface de came courbée (42, 44, 46, 48) est disposé radialement vers l'intérieur de la surface.

5. Amortisseur de vibrations de torsion selon l'une quelconque des revendications précédentes, dans lequel le bloc de came (30) est muni d'une face de butée (52, 54) qui peut être engagée par une face d'appui (56, 58) sur un des doigts respectifs (38, 40) pour limiter la rotation relative entre les premier et deuxième éléments (20, 22).

6. Amortisseur de vibrations de torsion selon l'une quelconque des revendications précédentes, dans lequel le deuxième corps est muni d'une paire de doigts flexibles intérieurs (40) et d'une paire de doigts flexibles extérieurs (38), les doigts flexibles extérieurs et intérieurs respectifs (38, 40) s'étendant du deuxième corps vers un autre, les surfaces de came (70, 72, 74, 76) des paires de doigts flexibles extérieurs et intérieurs (38, 40) étant en contact avec les surfaces de contre-came) respectives (42, 44, 46, 48 sur le même bloc.

7. Amortisseur de vibrations de torsion selon la revendication 6 quand il dépend de la revendication 5, dans lequel la face de butée sur le bloc de came (30) est une face de butée d'une paire de faces de butée (52, 54) qui sont positionnées pour s'engager avec les doigts extérieurs respectifs (38).

8. Amortisseur de vibrations de torsion selon la revendication 6 ou 7, dans lequel le bloc (30) est un bloc d'une pluralité de blocs similaires sur le corps, les surfaces de contre-came (42, 44, 46, 48) de chaque bloc de came (30) étant en contact avec respectivement des surfaces de came (70, 72, 74, 76) de quatre des doigts flexibles (38, 40).

9. Amortisseur de vibrations de torsion selon l'une quelconque des revendications 6 à 8, dans lequel les doigts flexibles extérieurs et intérieurs (38, 40) en contact avec chaque bloc de came (30) sont raccordés au deuxième corps à des régions de support écartées (36) du deuxième corps, chaque région de support portant deux doigts flexibles extérieur et intérieur en direction opposée parmi les doigts flexibles extérieurs et intérieurs (38, 40).

10. Amortisseur de vibrations de torsion selon l'une quelconque des revendications précédentes, dans lequel le premier corps comprend un boîtier qui accueille le deuxième corps.

11. Amortisseur de vibrations de torsion selon la revendication 10, dans lequel le boîtier contient un lubrifiant.

12. Amortisseur de vibrations de torsion selon l'une quelconque des revendications précédentes, dans lequel le premier corps est un des deux premiers corps du premier élément (20) et le deuxième corps est un des deux deuxièmes corps du deuxième élément (22), les deux premiers corps et les deux deuxièmes corps définissant des unités d'amortissement respectives (16, 18) qui sont écartées l'une de l'autre le long de l'axe central (12) et raccordées entre elles par un élément de raccordement (2).

13. Amortisseur de vibrations de torsion selon l'une quelconque des revendications précédentes, dans lequel un premier bras de raccordement (10) est assujetti au premier élément (20) et un deuxième bras de raccordement (10) est assujetti au deuxième élément (22), les bras de raccordement (10) pouvant pivoter l'un par rapport à l'autre autour de l'axe central (12).

14. Mécanisme incorporant un amortisseur de vibrations de torsion selon l'une quelconque des revendications précédentes.

15. Mécanisme selon la revendication 14, lequel est un rotor à aubage, de préférence qui est un rotor de queue d'hélicoptère.
